# EUROPEAN PATENT APPLICATION

(11) **EP 0 942 054 A1**
(43) Date of publication of application: **15.09.1999**
(21) Application number: 98104383.9
(22) Date of filing: 11.03.1998
(51) Int. Cl.: C09J 7/00, C09J 5/00, C09J 7/02

(54) **Multilayer adhesive construction**

(71) Applicant: MINNESOTA MINING AND MANUFACTURING COMPANY, St. Paul, Minnesota 55133-3427 (US)
(72) Inventor: Hitschmann, Guido, St. Paul, Minnesota 55144-1000 (US); Klingen, Juergen, St. Paul, Minnesota 55144-1000 (US)
(74) Representative: Wilhelm, Stefan

(57) **Abstract**

The invention refers to an assembly comprising a first substrate (1) and a second substrate (4), a surface (1a) of the first substrate (1) being bonded to a surface (4a) of the second substrate (4) by an adhesive system comprising at least one pressure-sensitive adhesive layer (2) and at least one cured structural hybrid adhesive layer (3) wherein at least one of the pressure-sensitive adhesive layers is essentially continuous and extends essentially over the full width of the bonded area and wherein in case two or more pressure-sensitive adhesive layers (2) are present the pressure sensitive adhesive layers (2) are not in contact with each other and each have a thickness of about 100 µm or less.

## Description

### Field of the invention

The present invention relates to an assembly comprising a first substrate and a second substrate, a surface of the first substrate being bonded to a surface of the second substrate by an adhesive system comprising at least one pressure sensitive adhesive layer and at least one cured structural hybrid adhesive layer. The present invention also relates to an adhesive system comprising at least one uncured structural hybrid adhesive layer and at least one pressure sensitive adhesive layer.

### Background of the invention

Above and below the term structural hybrid adhesive refers to adhesives comprising a thermosettable polymer component, a thermoplastic polymer component, and an effective amount of heat-activatable hardener component and/or a photoinitiator component, wherein said adhesive exhibits a latent crosslinkability, i.e. can be converted to a thermoset by exposing it to heat and/or actinic radiation.

Structural hybrid pressure-sensitive adhesive tapes, the structural hybrid pressure-sensitive adhesive of which comprises a thermosettable polymer component, a thermoplastic polymer component, and an effective amount of a heat-activatable hardener component are described, for example, in U.S. Patent No. 5,086,088. The tapes can be obtained, for example, by coating a premix comprising from about 30% to about 80% by weight of a photopolymerizable prepolymeric or monomeric syrup containing an acrylic acid ester and a polar copolymerizable monomer, from about 20% to about 60% by weight of an epoxy resin or a mixture of epoxy resins containing no photopolymerizable groups, from about 0.5% to about 10% by weight of a heat-activatable hardener for crosslinking the epoxy resin, from about 0.01% to about 5% of a photoinitiator, and from 0% to about 5% of a photocrosslinking agent, onto a flexible carrier web such as a silicone treated release liner. The photoactive acrylate component including the photocrosslinking agent is subsequently UV-cured to yield a structural hybrid pressure-sensitive adhesive tape with a thermoplastic polyacrylate component and a thermally curable epoxy component. The structural hybrid pressure-sensitive adhesive tape of US '088 can be crosslinked upon exposure to temperatures of, for example, 170°C to allow for high bonding strengths.

European Patent Publication No. 0,620,259 discloses optionally tacky structural hybrid hot melt films which comprise, for example, a thermosettable epoxy component, a thermoplastic polyester component, a photoinitiator for cationically curing the epoxy component and optionally a hydroxyl-containing material.

WO 94/08,781 discloses a pressure sensitive structural adhesive material comprising a core layer of a thermally curable structural adhesive providing opposed surfaces and having on at least one surface thereof a separate continuous or discontinuous layer of a tacky pressure sensitive adhesive, the pressure sensitive adhesive being absorbed in the core layer upon curing.

Structural hybrid adhesive tapes allow for the preparation of assemblies which are obtainable by sandwiching the tape between two substrates such as, for example, glass or metal substrates with subsequent thermosetting or crosslinking of the structural hybrid adhesive tape. Such assemblies are often characterized by desirable mechanical properties such as high values of overlap shear strength or impact strength. It was, however, observed that the weathering resistance of such assemblies does not always meet all practical requirements and that, in particular, the mechanical properties of such assemblies may deteriorate on exposure to water or humidity. When using structural hybrid adhesive tapes for bonding a glass substrate to a polymer substrate, the resulting assembly obtained after curing may be temperature-sensitive, and the glass substrate may crack or flake on cooling the assembly to lower temperatures of for example, -40°C. It was also observed that, in particular, when adhering a cationically curable structural adhesive material to a metal surface this may result in corrosion of the metal surface.

Therefore there was a need for improving the moisture resistance, corrosion resistance and/or low temperature stability of assemblies comprising structural hybrid adhesive tapes without adversely affecting other properties of the assemblies such as, for example, the static shear strength, the dynamic shear strength and/or the impact resistance to a degree which is unacceptable for various applications. Other advantages of the present invention can be taken from the following detailed disclosure of the invention.

### Brief description of the invention

The present invention relates to an assembly comprising a first and a second substrate, a surface of the first substrate being bonded to a surface of the second substrate by an adhesive system comprising at least one pressure sensitive adhesive layer and at least one cured structural bonding adhesive layer wherein at least one of the pressure sensitive adhesive layers is essentially continuous and extends essentially over the full width of the bonded area and wherein in case two or more pressure sensitive adhesive layers are present, these are not in contact with each other and each have a thickness of about 100 µm or less.

The present invention also refers to an adhesive system comprising at least one pressure sensitive adhesive layer and at least one uncured structural bonding adhesive layer wherein in case of two or more pressure sensitive adhesive layers, these are not in contact with each other and each have a thickness of about 100 µm or less, wherein at least one pressure sensitive adhesive layer is essentially continuous and extends essentially over the full width of the adhesive system and wherein at least the essentially continuous pressure sensitive adhesive layer extending essentially over the full width of the adhesive system is not fully absorbed in the structural bonding adhesive layers upon curing.

The present invention furthermore refers to a method of preparing an assembly according to the invention comprising a first and a second substrate and an adhesive system according to the present invention or one or more pressure-sensitive adhesive layers and one or more uncured structural hybrid adhesive layers, respectively, sandwiching the adhesive system between a surface of the first substrate and a surface of the second substrate or placing the uncured structural hybrid adhesive layers and the pressure-sensitive adhesive layers between the substrates 1 and 4, respectively, and curing the curable structural bonding adhesive layer or layers.

### Brief description of the figures

- Fig. 1a: shows a first embodiment of an assembly according to the invention comprising a first substrate 1 and a second substrate 4, a surface 1a of the first substrate 1 being bonded to a surface 4a of the second substrate 4 by an adhesive system comprising a pressure sensitive adhesive layer 2 and a structural adhesive layer 3.
- Fig.1b: shows a modified version of the assembly of Fig. 1a wherein the width of the pressure sensitive adhesive layer 2 exceeds the width of the structural hybrid adhesive layer 3.
- Fig.2: shows another embodiment of an assembly according to the invention wherein the adhesive system comprises two structural adhesive layers 3 sandwiching a pressure-sensitive adhesive layer 2.
- Fig.3: shows another embodiment of an assembly according to the invention wherein the adhesive system comprises two pressure-sensitive adhesive layers 2 sandwiching a structural hybrid adhesive layer 3.

### Detailed description of the invention

The assembly according to the present invention comprises a first substrate 1 and a second substrate 4, a surface 1a of the first substrate 1 being bonded to a surface 4a of the second substrate 4 by an adhesive system comprising at least one pressure sensitive adhesive layer 2 and at least one structural adhesive layer 3.

The thermosettable polymer component of the structural hybrid adhesive may comprise one or more polymers which are selected from a group consisting of epoxy resins, phenolic resins, melamine resins and aminoplast resins, cyanate resins, alkryd resins, allyl resins, silicones or moisture curable urethanes. The thermosettable polymer component is preferably based on one or more epoxy resins. Such compounds, broadly called epoxides, include monomeric epoxy compounds and epoxides of the polymeric type and can be aliphatic, cycloaliphatic, aromatic or heterocyclic. Monomeric and oligomeric epoxy compounds preferably have at least two or more, preferably two to four, polymerizable epoxy groups per molecule. In polymeric type epoxides or epoxy resins, there may be many pendent epoxy groups (e.g., a glycidyl methacrylate polymer could have several thousand pendent epoxy groups per average molecular weight). Oligomeric epoxides and, in particular, polymeric epoxy resins are preferred.

The molecular weight of the epoxy-containing materials may vary from low molecular weight monomeric or oligomeric materials with a molecular weight, e.g., from about 100 to polymeric resins with a molecular weight of about 50,000 or more and may vary greatly in the nature of their backbone and substituent groups. For example, the backbone may be of any type, and substituent groups thereon can be any group not having a nucleophilic group or electrophilic group (such as an active hydrogen atom) which is reactive with an oxirane ring. Illustrative of permissible substituent groups are halogens, ester groups, ethers, sulfonate groups, siloxane groups, nitro groups, amide groups, nitrile groups, phosphate groups, etc. Mixtures of various epoxy-containing compounds can also be used in the epoxy component. The epoxy component preferably comprises a mixture of two or more epoxy resins in order to modify and adapt the mechanical properties of the crosslinked structural hybrid pressure-sensitive adhesive with respect to specific requirements.

The term "epoxy resin" is used herein to mean any of monomeric, dimeric, oligomeric or polymeric epoxy materials containing a plurality, i.e. at least 2, of epoxy functional groups. Types of epoxy resins that can be used include, for example, the reaction product of bisphenol A and epichlorohydrin, the reaction product of phenol and formaldehyde (novolac resin) and epichlorohydrin, peracid epoxies, glycidyl esters, the reaction product of epichlorohydrin and p-amino phenol, the reaction product of epichlorohydrin and glyoxal tetraphenol and the like.

Suitable commercially available diglycidic ethers of bisphenol-A are Ciba Geigy Araldite ™ 6010, Dow Chemical DER ™ 331, and Shell Chemical Epon™ 825, 828, 826, 830, 834, 836, 1001, 1004, 1007, etc.

A polyepoxidized phenol formaldehyde novolac prepolymer is available from Dow Chemical as DEN™ 431 and 438, and from Ciba Geigy as CY-281™. A polyepoxidized cresol formaldehyde novolac prepolymer is available from Ciba Geigy as ECN™ 1285, 1280 and 1299.

A polyglycidyl ether of polyhydric alcohol is available from Ciba Geigy, based on butane-1,4-diol, as Araldite ™ RD-2; and from Shell Chemical Corporation based on glycerine, as Epon™ 812.

Suitable commercially available flexible epoxy resins include polyglycol diepoxies, DER ™ 732 and 736, from Dow Chemical Company, diglycidyl ester of linoleic dimer acid, Epon ™ 871 and 872 from Shell Chemical Company, diglycidyl ester of a bisphenol in which the aromatic rings are linked by a long aliphatic chain, Lekutherm ™ X-80, from Mobay Chemical Company, epoxidized synthetic rubber materials which are available from Shell Chemical Corporation and epoxidized natural rubber materials such as ENR-10, ENR-25 and ENR-50 which are available from the Rubber Research Institute of Malaysia. The ENR materials are described in Encyclopedia of Polymer Science and Engineering, New York 1988, vol. 14, p. 769.

Difunctional epoxy resins which can be used include, for example, a solid resin, N,N,N',N',-tetraglycidyl-a,A'-bis(4-aminophenyl)-p-diisopropylbenzene, HPT ™ 1071 from Shell Company, solid diglycidyl ether of bisphenol-9-fluorene, HPT ™ 1079 from Shell Chemical Company, and triglycidylether of paraaminophenol, Araldite ™ 0500/0510 from Ciba-Geigy Corporation.

High functional epoxy resins (i.e. functionality greater than 2) which can be used include, for example, a solid epoxy novolac resin, DEN ™ 485 from Dow Chemical Company, a tetrafrinctional solid epoxy resin, Epon ™ 1031 from Shell Chemical Company, and N,N,N',N'-tetraglycidyl-4,4'-methylenebisbenzenamine, Araldite ™ MY 720 from Ciba Corporation.

Useful cycloaliphatic epoxy resins include, for example, vinylcyclohexane dioxide which is commercially available as ERL-4206 from Union Carbide Corp., 3,4-epoxycyclohexylmethyl-3,4-epoxycyclohexane carboxylate commercially available as ERL-4221 from Union Carbide Corp., 3,4-epoxy-6-methylcyclohexylmethyl-3,4-epoxy-6-methylcyclo hexane carboxylate commercially available as ERL-4201 from Union Carbide Corp., bis(3,4-epoxy-6-methylcyclohexylmethyl)adipate commercially available as ERL-4289 from Union Carbide Corp. or bis(2,3-epoxycyclopentyl)ether commercially available as ERL-0400 from Union Carbide Corp.

The thermoplastic polymer component preferably comprises one or more polymers which are selected from a group consisting of polyacrylates, polyesters, polycarbonates, polyamides, polyethers, polyimides and polysulfones.

The thermoplastic polymer component preferably comprises, for example, one or more polyester compounds which may be hydroxyl or carboxyl terminated and include both amorphous and semicrystalline materials. Hydroxyl terminated materials are preferred. By "amorphous" is meant a material that displays a glass transition temperature but does not display a measurable crystalline melting point by differential scanning calorimetry (DSC). Preferably the glass transition temperature is less than the decomposition temperature of any of the compounds of the heat-activatable hardener component and photoinitiator component, but without being more than about 120°C. By "semicrystalline" is meant a polyester component that displays a crystalline melting point by DSC, preferably with a maximum melting point of about 150°C.

Polyester compounds useful in the present invention comprise the reaction product of dicarboxylic acids (or their diester derivatives) and diols. The diacids (or their diester derivatives) can be saturated aliphatic acids containing from 4 to 12 carbon atoms (including unbranched, branched, or cyclic materials having 5 to 6 atoms in a ring) and/or aromatic acids containing from 8 to 15 carbon atoms. Examples of suitable aliphatic acids are succinic, glutaric, adipic, pimelic, suberic, azelaic, sebacic, 1,12 dodecanedioic, 1,4-cyclohexanedicarboxylic, 1,3-cyclopentanedicarboxylic, 2-methylsuccinic, 2-methylpentanedioic, 3-methylhexanedioic acids and the like. Suitable aromatic acids include terephthalic acid, isophthalic acid, phthalic acid, 4,4'benzophenone dicarboxylic acid, 4,4'-diphenylmethanedicarboxylic acid, 4,4'-diphenylether dicarboxylic acid, 4,4'diphenylthioether dicarboxylic acid and 4,4'-diphenylamine dicarboxylic acid. Preferably the structure between the carboxyl groups in these diacids contains oniy carbon and hydrogen; more preferably it is a phenylene group. Blends of any of the foregoing diacids may be used.

The diols include branched, unbranched, and cyclic aliphatic diols having from 2 to 12 carbon atoms, such as, for example, ethylene glycol, 1,3-propylene glycol, 1,2-propylene glycol, 1,4-butanediol, 1,3-butanediol, 1,5-pentanediol, 2-methyl-2,4-pentanediol, 1,6-hexanediol, 1,8-octanediol, cyclobutane-1,3-di(2-ethanol), cyclohexane-1,4-dimethanol, 1-10-decanediol, 1,12-dodecanediol, and neopentyl glycol. Long chains diols including poly(oxyalkylene) glycols in which the alkylene group contains from 2 to 9 carbon atoms (preferably 2 to 4 carbon atoms) may also be used. Blends of any of the foregoing diols may be used.

Useful, commercially available hydroxyl terminated polyester materials include various saturated, linear, semicrystalline copolyesters available from Hüls America, Inc. such as DYNAPOL S1402, DYNAPOL S1358, DYNAPOL S1227, DYNAPOL S1229 and DYNAPOL S1401. Useful saturated, linear amorphous copolyesters available from Hüls America, Inc. include DYNAPOL S1313 and DYNAPOL S1430.

In another embodiment, the thermoplastic polymer component, is preferably based on one or more polyacrylate compounds which can be obtained, for example, by photopolymerizing a monomeric or prepolymeric mixture of acrylic monomers containing at least one acrylic ester and at least one polar copolymerizable polar monomer as is described in U.S. Patent No. 5,086,088. Thermoplastic polyacrylate compounds which are useful in the present invention are also described, for example, in International Patent Publication No. WO 95/13,328.

The compounds enumerated above which are useful in the thermosettable or thermoplastic, respectively, polymer component of the structural hybrid adhesive are to illustrate the invention without limiting it.

The structural hybrid adhesive used in the present invention furthermore comprises a heat-activatable hardener component and/or a photoinitiator component which comprise an effective amount of one or more heat-activatable hardener compounds and/or one or more photoinitiator compounds, respectively, to effect crosslinking of the thermosettable component.

Suitable heat-activatable hardener compounds include polycarboxylic acid anhydrides, dicyandiamide, complexes of amines, such as ethylamine and trimethylamine with boron trifluoride or boron trichloride, aromatic polyamines such as bis(p-aminophenyl)methane, and imidazoles such as 2-ethyl-4-methylimidazole and 2-phenylimidazole. It is also possible to use latent heat-activatable hardener compounds. The term "latent" means that the initiator component is essentially unreactive at room temperature but rapidly reacts to effect curing once the onset temperature of the epoxy curing reaction has been exceeded. Latency of the hardener compounds is preferably based on solvent effects and the activity of the hardener compounds can be controlled, for example, by crystallinity, solubility or encapsulation. Crystalline hardener compounds are commercially available, for example, as Ancamine™ A 2337 X S and A 2014 G from Air Products, Manchester, U.K. An example of an encapsulated hardener compound is HX 938 which is commercially available from Ciba Geigy Corp.

When using a heat-activatable hardener component it may be advantageous to add one or more accelerators to the heat-activatable hardener component in order to crosslink the structural hybrid pressure-sensitive adhesive tape at lower temperatures and/or shorter times. Preferred accelerator compounds include imidazoles such as, for example, 2,4-diamino-6-(2'-methyl-imidazoyl)-ethyl-s-triazine isocyanurate, 2-phenyl-4-benzyl-5-hydoxymethylimidazole or Ni-imidazole-phthalate.

Suitable photoinitiators include initiators effecting cationic polymerization such as metallocene salts and aromatic onium salts.

Suitable salts of organometallic complex cations (or metallocene salts) include but are not limited to, those salts having the following formula (I)

[(L¹)(L²)M^{ρ}]^{q}Yₙ (I)

wherein M^{ρ} represents a metal ion selected from the group consisting of Cr, Mo, W, Mn Re, Fe. and Co with p denoting the charge of the metal ion; L¹ represents 1 or 2 ligands contributing pi-electrons that can be the same or different ligand selected from the group of: substituted and unsubstituted η³-allyl, η⁵-cyclopentadienyl, and η⁷- cycloheptatrienyl, and η⁶-aromatic compounds selected from η⁶-benzene and substituted η⁶-benzene compounds and compounds having 2 to 4 fused rings, each capable of contributing 3 to 8 pi-electrons to the valence shell of M^{ρ}; L² represents none, or 1 to 3 ligands contributing an even number of sigma-electrons that can be the same or different ligand selected from the group of: carbon monoxide, nitrosonium, triphenyl phosphine, triphenyl stibine and derivatives of phosphorus, arsenic and antimony, with the proviso that the total electronic charge contributed to M^{ρ} results in a net residual positive charge of q to the complex; q is an integer having a value of 1 or 2, the residual charge of the complex cation ; Y is halogen-containing complex anion selected from BF₄⁻, AsF₆⁻, PF₆⁻, SbF₅OH⁻, SbF₆⁻, and CF₃SO₃⁻; and n is an integer having a value of 1 and 2, the number of complex anions required to neutralize the charge q on the complex cation.

Metallocene salts of formula (I) are described, for example, in U.S. Patent No. 5,089,536, U.S. Patent No. 5,059,701 and European Patent Publication No. 0,109,851.

Also preferred are aromatic onium salts which are disclosed, for example in U.S. Pat. Nos. 4,069,054, 4,231,951 and 4,250,203. Such salts can be described by the formula:

AX (II)

wherein A is an organic cation selected from those described in U.S. Pat. Nos. 3,708,296, 3,729,313, 3,741,769, 3,794,576, 3,808,006, 4,026,705, 4,058,401, 4,069,055, 4,101,513, 4,216,288, 4,394,403, and 4,623,676, all incorporated herein by reference, and X is an anion where X is defined as Y in formula (I) above.

A is preferably selected from diazonium, iodonium, and sulfonium cations and more preferably from diphenyliodonium, triphenylsulfonium and phenylthiophenyl diphenylsulfonium. X preferably is selected from the group of anions consisting of CF₃SO₃⁻, BF₄⁻, PF₆⁻, SbF₆⁻, SbF₅OH⁻, AsF₆⁻, and SbCl₆⁻.

Aromatic iodonium salts and aromatic sulfonium salts are preferred. Especially preferred aromatic iodonium and aromatic sulfonium salts are described in European Patent Publication No. 0,620,259, p. 5, ln. 17 to p. 6, ln. 29.

Useful commercially available cationic photoinitiators include FX-512, an aromatic sulfonium complex salt (3M Company), UVI-6974, an aromatic sulfonium complex salt (Union Carbide Corp.), and IRGACURE 261, a metallocene complex salt (Ciba-Geigy).

If a photoinitiator component is used to effect crosslinking, it comprises between 0.001 - 5 % by weight and more preferably between 0.1 - 2 % by weight with respect to the total mass of the pressure-sensitive adhesive. The photoinitiator component preferably comprises 1-3 and, more preferably, 1 photoinitiator compound.

If a heat-activatable hardener component is used to effect crosslinking, it comprises between 2 - 50 % by weight and more preferably between 3 - 45 % with respect to the total mass of the pressure-sensitive adhesive of one or more, preferably 1-3 hardener compounds.

The structural hybrid adhesive may additionally comprise various fillers, adjuvants, additives and the like such as silica, glass, clay, talc, pigments, colorants, glass beads or bubbles, glass or ceramic fibers, antioxidants, flame retardants and the like so as to reduce the weight or cost of the composition, adjust viscosity, and provide additional reinforcement. Fillers and the like which are capable of absorbing the radiation used during the curing process(es) should be used in an amount that does not adversely affect the curing process. The amount of such additives may be between 0-50 wt.% and more preferably 0-15 wt.% with respect to the total mass of the structural hybrid pressure-sensitive adhesive.

The pressure sensitive adhesive layer or layers, respectively, can comprise various pressure sensitive adhesives including but not limited to acrylate-based pressure sensitive adhesives, styrene-isoprene block copolymers, acrylic ester-vinyl acetate copolymers, ethylene-vinyl acetate copolymers, plasticized vinyl acetate homopolymers and rubber-latex resin emulsion systems. Acrylate-based pressure sensitive adhesives are preferred. Acrylate-based pressure sensitive adhesives useful in practicing the invention preferably comprise polymers of one or more monomers of (meth)acrylic acids and optionally other copolymerizable monomers containing functional groups in addition to an ethylenically unsaturated group. The pressure sensitive adhesives may comprise conventional additives such as, for example, fillers, anti-oxidants, flame-retardants, pigments, plasticizers or polymer additives. By varying the nature and amount of the monomers and the nature and amount of the additives, the cohesive properties of the resulting adhesive can be changed as is known in the art.

Examples of acrylate-based pressure sensitive adhesives which are suitable in the practice of the invention are described in Satas, "Acrylic Adhesives, "Handbook of Pressure-Sensitive Adhesive Technology 2nd ed., pp. 396-456 (D. Satas, ed.), Van Nostrand Reinhold, New York (1989).

A particularly suitable acrylate based pressure sensitive adhesive includes copolymers of an acrylic or methacrylic acid and an alkyl acrylate or methacrylate wherein the alkyl group has at least 4 carbon atoms, typically 4 to 14 carbon atoms. Examples of such alkyl acrylates or methacrylates include n-butyl, n-pentyl, n-hexyl, cyclohexyl, isoheptyl, n-nonyl, n-decyl, isohexyl, isobornyl, 2-ethyloctyl, isooctyl, and 2-ethylhexyl acrylates and methacrylates. Preferred alkyl acrylates include isooctyl acrylate, 2-ethylhexyl acrylate, n-butylacrylate and cyclohexyl acrylate. A particularly preferred alkyl acrylate is isooctyl acrylate. Particularly preferred alkyl methacrylates include butyl methacrylate, cyclohexyl methacrylate, and isobornyl methacrylate.

The pressure sensitive adhesive and the structural hybrid adhesive useful in the present invention are selected so that at least the essentially continuous pressure sensitive adhesive extending essentially over the full width of the bonded area is at least not fully absorbed in the structural hybrid adhesive and remains essentially continuous upon curing.

The structural hybrid adhesive preferably exhibits a low onset temperature of the curing reaction of 100°C or less and more preferably of 80°C or less so that the curing reaction can be performed with the structural hybrid adhesive exhibiting a sufficiently high viscosity. Structural hybrid adhesives comprising one or more epoxy resins and having an onset temperature of the curing temperature of less than 100°C, preferably between 40-80°C and more preferably between 40-60°C are disclosed in PCT/US 96/18,841 filed by the present applicant on November 12, 1996. PCT/US 97/03,170 filed by the present applicant on February 28, 97 describes structural hybrid adhesives which can be cured upon exposure to actinic or e-beam irradiation, in particular to UV-radiation at ambient conditions. The curing reactions, however, in practical operation are preferably performed at elevated temperatures between 40 and 140 °C and more preferably between 60 and 120°C. It is speculated in PCT/US 97/03,170 that curing at elevated temperatures improves the wetting-out properties of the structural hybrid adhesive at the interface substrate surface/structural hybrid adhesive tape. In the present invention the heat applied to the structural adhesive tape or to the substrate it is attached to, is preferably kept low enough so as to facilitate surface wet-out while avoiding that the entire structural hybrid adhesive melts and becomes liquid.

The pressure sensitive adhesive materials useful in the pressure sensitive adhesive layer or layers, respectively, of the present invention comprises independent from each other a sufficient cohesive or inner strength which is selected so that at least the essentially continuous pressure sensitive adhesive layer extending essentially over the full width of the bonded area survives the curing of the structural hybrid adhesive as an essentially continuous layer. During the curing reaction, such essentially continuous pressure sensitive adhesive layer may be partly dissolved and/or penetrated by the structural hybrid adhesive at the interface between the essentially continuous pressure sensitive adhesive layer and the structural hybrid adhesive layer. Partial penetration and/or dissolution of the pressure sensitive adhesive layer or layers by the structural hybrid adhesive is often desired in order to increase the bonding strength between the pressure sensitive adhesive layer or layers, respectively, and the structural hybrid adhesive layer. It is, however, essential that such essentially continuous pressure sensitive adhesive layer remains intact as an essentially continuous layer over at least part of the initial thickness of the essentially continuous pressure sensitive adhesive layer prior to curing. The thickness of the continuous pressure sensitive adhesive layer after curing preferably is at least 1 µm and more preferably at least 5 µm.

The cohesive or inner strength of the pressure sensitive adhesive can be increased by crosslinking. Useful crosslinked for acrylate-based pressure sensitive adhesive adhesives include, for example, benzaldehyde, acetaldehyde, anthraquinone, various benzophenone-type and vinyl-halomethyl-s-triazine type compounds such as, for example, 2,4-bis(trichloromethyl)-6-p-methoxystyryl-s-triazine. Preferred are polyacrylic-functional monomers such as, for example, trimethylolpropane triacrylate, pentaerythritol tetraacrylate, 1,2-ethylene glycol diacrylate, tripropyleneglycoldiacrylate, 1,6-hexanediol diacrylate or 1,12-dodecanediol diacrylate. The compounds listed above, which can be substituted or unsubstituted, are intended to be illustrative and by no means limitative. The crosslink density of rubber based pressure sensitive adhesions can be increased, for example, by e-beam or chemical crosslinking.

The cohesive or inner strength of the pressure sensitive adhesive is macroscopically reflected in the dynamic shear strength. It was found by the present inventors that the pressure sensitive adhesive material is preferably selected so that the force for straining a test sample of a pressure sensitive adhesive sheet material having a thickness of 50 µm by 0.5 mm using the test method for measuring the dynamic shear strength of the pressure sensitive adhesive layer described in the test section below, is at least 20 N and more preferably at least 25 N.

The assemblies according to the present invention comprise a first substrate 1 and a second substrate 4 exhibiting surfaces 1a and 4 a, respectively, which are bonded by the adhesive system according to the present invention. The substrates 1, 4 and/or the surfaces 1a, 4a may be selected from a broad group of materials such as metals, plastics, glass, ceramics and wood. Metal, plastic, glass and ceramic surfaces 1a, 4a and/or substrates 1, 4 are preferred. The structural hybrid adhesive material of a structural hybrid adhesive layer contacting surface 1a or 4a is preferably selected to provide a strong bond to the respective surface. If desired, the surface to be adhered to such structural hybrid adhesive layer may be treated with a primer as is described in copending U.S. patent application serial no. 08/886,756 filed by the present applicant on July 1, 1997. The bond between the cured structural hybrid adhesive layer and the respective substrate preferably exhibits an overlap shear strength of at least 3 N/mm², more preferably of at least 5 N/mm² and especially preferably of at least 7 N/mm² as measured according to ISO 4587. The pressure sensitive adhesive material of a pressure sensitive adhesive layer contacting surface 1a or 4a is preferably selected to provide a bond to the respective surface having a 90° peel adhesion of at least 2 N/cm, and more preferably of at least 5 N/cm as measured according to ISO 8510-1. If desired, the surface to be adhered to such pressure sensitive adhesive may be corona-treated or treated with a chemical primer.

The thickness of the structural adhesive layer or layers, respectively, preferably is independent from each other between 50 µm and 5 mm and more preferably between 100 µm and 3 mm. The thickness and viscosity of the structural adhesive layer to be adhered to a surface 1a, 4a is preferably selected in view of the properties of the respective surface. If such surface exhibits, for example, a considerable average roughness as measured according to DIN 4762 of for example, d ≃ 200 µm, the structural hybrid adhesive layer preferably has a thickness of at least about d and more preferably of about 2d and exhibits a viscosity at room temperature and/or at the curing temperature to allow the structural hybrid adhesive layer to conform to the respective surface. Like wise, if one of the surfaces is, for example, essentially flat whereas the over surface slightly deviates from flatness and is, for example, slightly curved with a maximum deviation of for example, d ≠ 200 µm, the thickness of the structural hybrid adhesive layer preferably is about d and more preferably about 2d or more.

It is essential for the present invention that
(i) at least one of the pressure sensitive adhesive layer or layers is essentially continuous and extends essentially over the full width of the bonded area, and
(ii) that the pressure sensitive adhesive layer or layers, respectively, independently of each other have a thickness of about 100 µm or less and are not in contact with each other.

Feature (i) ensures that
- neither of the structural hybrid adhesive layer or layers, respectively, is in contact with both substrates, and
- the structural hybrid adhesive layer or layers, respectively, of the adhesive system are essentially "decoupled" so that there is essentially no continuous path from surface 1a to surface 4a comprising only structured hybrid adhesive material or materials, respectively.

It was found by the present inventors that when bonding two substrates 1 and 4, the thermal expansion coefficients of which differ at room temperature by 3 x 10⁻⁵ K⁻¹ or more and, in particular, by 5 x 10⁻⁵ K⁻¹ or more, to each other with a structural hybrid adhesive layer only, the resulting assembly obtained upon curing is temperature-sensitive and may be damaged, in particular, at lower temperatures. This effect is especially pronounced when one of the substrates is of plastic such as, for example, ABS, ASA, PMMA, PVC or PET, and the other is of glass optionally comprising a ceramic surface layer or metal such as, for example, stainless steel, aluminum, copper or brass. It is described in Comparative Example 1 below that subjecting an assembly comprising an ABS substrate bonded to a ceramic-coated glass substrate with the structural adhesive layer prepared in Example 1 to the low temperature cycle described below, results in the formation of cracks and flakes in the glass substrate. Damaging of the glass substrate can be avoided when using an adhesive system according to the present invention instead of the structural hybrid adhesive layer.

The above feature (ii) ensures that the properties of the adhesive system of the present invention are not dominated by the pressure sensitive adhesive layer. Upon curing, a high internal strength is imparted to the structural adhesive layer or layers, respectively. When subjecting an assembly comprising one or more cured structural hybrid adhesive layers and one or more pressure sensitive adhesive layers to the dynamic shear test of the cured assembly described in the test section below, the assembly shows a displacement relative to its initial position prior to moving the jaws of the tensile tester. It was found that the displacement which may also be termed as creep, increases for a given force and for a specific pressure sensitive adhesive material with increasing thickness of the pressure sensitive adhesive layer or layers, respectively.

The present inventors found that the influence of the pressure sensitive adhesive layer or layers, respectively, on the mechanical properties of the adhesive system is too high when the thickness of the pressure sensitive adhesive layer or layers, respectively, are larger than about 100 µm. Although the creep measured for a given force also depends on the nature of the pressure sensitive adhesive layer or layers, respectively, it was found that for values of the thickness of about 100 µm or less, the pressure sensitive adhesive layer or layers, respectively, effectively dissipate stress which may build up when subjecting the adhesive system, for example, to the low temperature cycle described below, whereas the high internal strength of the cured structural hybrid adhesive layer or layers, respectively, dominates the mechanical properties of the adhesive system.

It is preferred that the essentially continuous pressure sensitive adhesive layer extending essentially over the full width of the bonded area, forms an exposed layer of the adhesive system of the present invention and contacts one of the surfaces 1a, 4a of the assembly of the present invention. Such exposed pressure sensitive adhesive layer modifies the surface properties of the adhesive systems and, in particular, improves the moisture resistance and the corrosion resistance at the interface between the surface of the substrate 1a, 4a and the pressure sensitive adhesive layer. Due to the low thickness of the pressure sensitive adhesive layer or layers, respectively, the bulk properties of the cured adhesive system are dominated by the cured structural hybrid adhesive layer or layers, respectively, whereas the surface properties of the cured adhesive system are essentially determined by the pressure sensitive adhesive layer.

The adhesive system according to the present invention preferably comprises 1-3 and especially preferably 1-2 pressure sensitive adhesive layers. At least one of the pressure sensitive adhesive layers is essentially continuous and extends essentially over the full width of the bonded area. Further pressure sensitive adhesive, if present, may be essentially continuous or patterned but preferably are also essentially continuous.

The number of the structural hybrid adhesive layers preferably is between 1-3 and especially preferably between 1-2. The sum of the thicknesses of the pressure sensitive adhesive layers over the sum of the thicknesses of the cured structural hybrid adhesive layers preferably is between 0.001 and 0.5, and more preferably between 0.005 and 0.33.

A preferred embodiment of an assembly according to the invention is schematically shown in Fig. 1a. The assembly comprises two substrates 1, 4 having surfaces 1a, 4a which are bonded by an adhesive system comprising a continuous pressure sensitive adhesive layer 2 extending over the full width of the bonded area and a structural hybrid adhesive layer 3. In the embodiment of Fig. 1a the thickness of the pressure sensitive adhesive layer preferably is between 5-100 µm and more preferably between 10-60 µm. The thickness of the structural hybrid adhesive layer preferably is between 50 µm and 6 mm and more preferably between 100 µm and 3 mm. The ratio of the thickness of the pressure sensitive adhesive layer to the thickness of the structural hybrid adhesive layer preferably is 0.5 or less and more preferably is 0.4 or less.

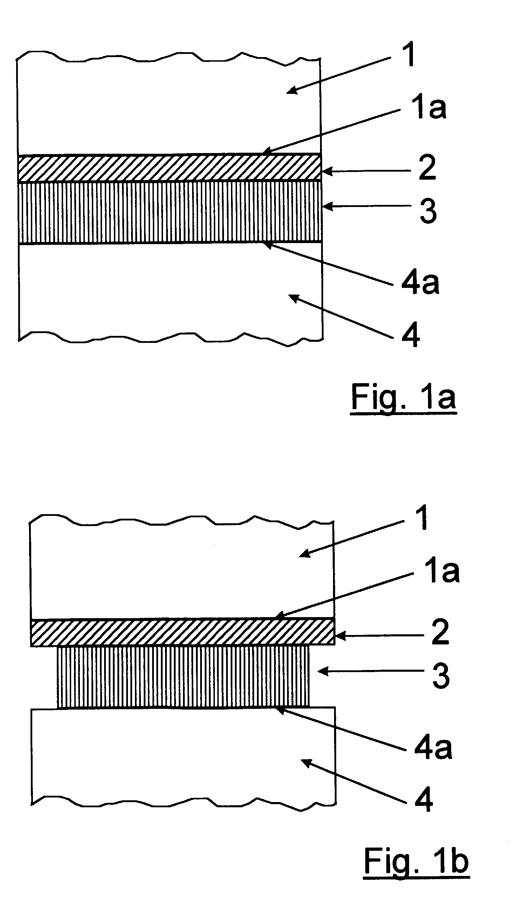

Depending on the pressure exerted onto the substrates 1, 4 during curing, the curing temperature and the viscosity of the uncured structural hybrid adhesive layer at room temperature and at curing temperature, the structural hybrid adhesive layer 3 may be squeezed beyond the edges of the pressure sensitive adhesive layer 2 thereby also contacting substrate 1. In order to prevent the structural hybrid adhesive layer 3 from contacting both substrates 1 and 4, the lateral extension of the structural adhesive layer 3 preferably is smaller than the lateral extension of the pressure sensitive adhesive layer 2 as is schematically shown in Fig. 1b. Alternatively, in case the structural hybrid adhesive layer 3 is UV-curable, the periphery of the structural adhesive tape may be cured prior to preparing the assembly by masking the inner part of the structural adhesive layer and irradiating the periphery with UV-radiation. The cured periphery is not sqeezable and retains the inner part of the structural hybrid adhesive layer 3 during curing.

The embodiment of Fig. 1a and 1b effectively dissipates stress which may build between substrates 1 and 4, and pressure sensitive adhesive layer 2 imparts increased moisture and corrosion resistance to the interface between substrate 1 and pressure sensitive adhesive layer 2.

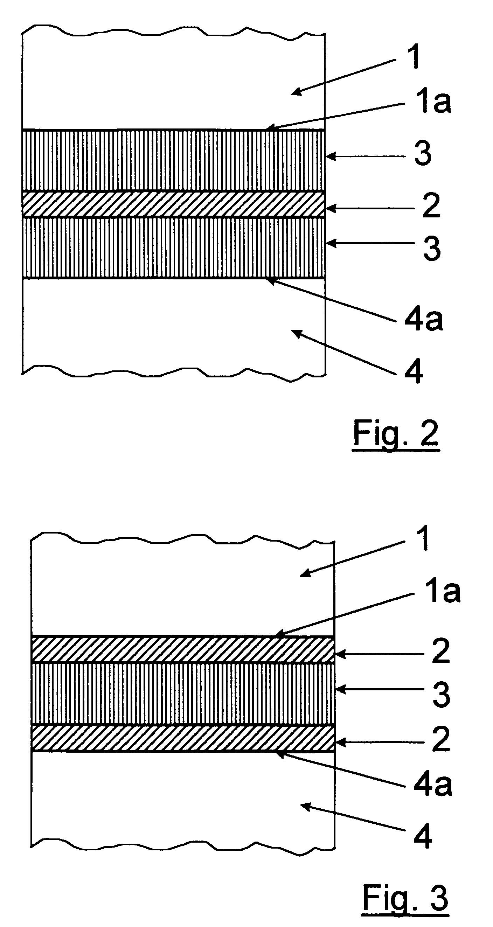

Another preferred embodiment of an assembly according to the present invention is schematically shown in Fig. 2. The assembly comprises two substrates 1, 4 and two structural hybrid adhesive layers 3 sandwiching the pressure sensitive adhesive layer 2. The thickness of the pressure sensitive adhesive layer 2 preferably is between 20 and 100 µm and more preferably between 40 and 100 µm, and the thickness of the structural hybrid adhesive layers preferably is independent from each other as described above in embodiment 1. The embodiment of Fig. 2 effectively dissipates stress which may build between substrates 1 and 4, and it is preferred when two strong bondings with a high overlap shear strength are required between substrates 1 and 4 and the adhesive system.

Another preferred embodiment of assembly according to the present invention is schematically shown in Fig. 3. The assembly comprises two substrates 1, 4 and two pressure sensitive adhesive layers 2 sandwiching the structural hybrid adhesive layer 3. The thicknesses of the pressure sensitive adhesive layers 2 preferably are independently from each other between 10 and 80 µm and more preferably between 10 and 60 µm. The thickness of the structural hybrid adhesive layer 3 preferably is between 100 µm and 5 µm and more preferably between 200 µm and 5 mm. The embodiment of Fig. 3 effectively dissipates stress which may build between substrates 1, 4 and it is preferred when increased moisture and corrosion resistance is required at the interfaces between substrates 1 or 4, respectively, and the pressure sensitive adhesive layers 2.

The geometry of the assembly is shown in Fig. 1-3 schematically only. The surfaces 1a, 4a can be essentially planar as is shown in Fig. 1-3 but they may also be curved or shaped otherwise. The surfaces 1a, 4a may be essentially smooth but they may also exhibit a surface roughness R_{Z} as measured according to DIN 4762 of for example, up to 500 µm or more. The width of the surfaces 1a, 4a may be different from each other.

The adhesive systems according to the present invention can be prepared in various ways. A structural hybrid adhesive layer is usually provided first as described, for example, in PCT/US 96/18, 841 or PCT/US 97/03,170. The pressure sensitive adhesive layer or layers, respectively, are then applied, for example, as a solvent-borne coating or spray-coated with subsequent drying at temperatures below the onset temperature of the curing reaction of the structural hybrid adhesive. Alternatively, the pressure sensitive adhesive layer or layers, respectively, may be laminated to the structural hybrid adhesive layer. Further structural hybrid adhesive layers and/or pressure sensitive adhesive layers may be applied similarly.

If a UV-curable structural hybrid adhesive layer is used which is sandwiched, for example, between two pressure sensitive adhesive layers as is shown in Fig. 3, the pressure sensitive adhesive layers are required to be transparent for UV-radiation.

The assemblies according to the invention may be prepared by sandwiching the adhesive system between the substrates followed by curing. Alternatively, the structural hybrid adhesive layer or layers, respectively, and the pressure sensitive adhesive layer or layers, respectively, may be applied to the substrates separately. In case the adhesive system comprises UV-curable structural hybrid adhesive layer or layers, the curing reaction is preferably initiated by irradiating the adhesive system first, and the substrates are subsequently applied to the adhesive system. If one or both of the substrates is UV-transparent, curing may also be obtained by irradiating the assembly with UV-light.

Curing is generally effected by applying heat and/or UV- radiation to the adhesive system. During and optionally also prior to the curing reaction, pressure is preferably applied to the substrates in order to ensure formation of good bondings between the substrates and the adhesive system, and within the adhesive system, respectively. The pressure applied preferably is between 0.01 and 3 N/mm². The curing times vary with the curing conditions and the chemical nature of the structural hybrid adhesive layer or layers, respectively, and they are typically between a few seconds and several days.

The invention is further illustrated by the following, non-limiting examples, First, however, certain procedures and tests utilized in the examples, will be described.

### Test methods

### Static shear strength of the cured assembly

A clear float glass sheet (10 cm x 5 cm x 6 mm) having a black ceramic layer on one side was obtained from Dr. Matthias Rocholl Comp., Heidelberg. A window pin was bonded to the air side of the glass as is described in the Examples and allowed to cure at 23°C for 24 h. The window pin was made from ABS and had a circular base (diameter 20 mm, height 5 mm) and a cylindrically shaped stem (diameter 8 mm, height 14 mm) emanating from the center of the circular base. The total height of the window pin was approximately 19 mm. The window pin was prepared by injection molding using an acrylonitrile butadiane styrene (ABS) polymer, available as LUSTRAN QE 1455 L2 from Bayer AG, Leverkusen, Germany. This ABS pin will be termed above and below as window pin. The glass sheet was vertical and the window pin extended laterally at 90°. A small steel plate bearing a hole slightly larger than the window pin head was placed over the window pin head. A 5 kg weight was then hung from the plate.

The time required for bond failure was measured.

### Impact resistance of the cured assembly

A sheet of single layer, tempered automotive safety float glass measuring 10 cm x 10 cm x 5 mm which was coated with a black ceramic layer on one side, was obtained from Sekurit, Herzogenrath, Germany. The samples correspond to automobile glass commercially available from Sekurit under the designation (E1) 43 R-001057Dot27 M 23100 AS2 (automobile glass for FORD Focus). A window pin was bonded to the ceramic layer as is described in the Examples and allowed to cure at 23°C for 24 hours.

The glass bearing the bonded window pin was fixed in a vertical position. Impact resistance was measured using a modified version of ISO 9653. The test configuration was modified so that the pendulum arm struck the head of the bonded window pin from the side at a point about 10 mm above the point where the pin base and pin head joined. The used pendulum had an energy of 4 J and a speed of 2.9 m/s at the point of impact.

The test was repeated three times and the results averaged.

### Low temperature cycle applied to he cured assembly

A single layer, tempered float safety glass sheet having an approximately triangular shape with side lengths of 30 cm, 30 cm and 20 cm and bearing a ceramic coating, on one side, was obtained from Pilkington Automotive, Birmingham, U.K. The sample corresponds to automobile glass, commercially available from Pilkington Automotive, Birmingham, U.K., under the designation (E11) 43 R -00002. 17-0122-AS2 (automobile glass for FORD Focus). A window pin was bonded to the ceramic layer of the glass sample as described in the Examples.

The glass sheet with the window pin being bonded to it, was placed in a freezer having a temperature of - 40°C for 60 min. The sample was removed from the freezer and allowed to return to ambient temperature. The bonded area was then examined visually for any defects or observable changes. The strength of the bond remaining after the Low Temperature Cycle was quantitatively evaluated by the dynamic shear test of the cured assembly described below.

### Dynamic shear test (23° C)

### a) of the cured assembly

The glass sheet with a window pin being bonded to it which had been subjected to the low temperature cycle described above was clamped in a vertical stand which could hold a sample for a tensile tester. The test was performed at a controlled temperature of 23° C. A plate bearing a hole similar to that described for the static shear test was placed over the pin head at a distance of a bout 7 mm from the base of the pin. The plate was then moved by the jaws of the tensile tester at a speed of 5 mm/min and in a fashion so as to exert shearing stress on the pin.

The amount of force, Fₘₐₓ, required to break the bond was measured and recorded.

### b) of the pressure sensitive adhesive layer

The measurement was performed using a modified version of ISO 4587. A sample of the pressure sensitive adhesive layer with a bonding area of 12.5 mm x 12.5 mm was provided and placed between two anodized Al foils each having a thickness of 0.1 mm, a length of 80 mm and a width of 15 mm so that the Al foils partly overlapped in the lengthwise direction (overlapping area about 15 x 15 mm²). The overlapping parts of the Al foils were adhered to each other by passing over twice a 6.8 kg hard rubber-covered steel roller. The resulting laminate was fixed to the clamps of an Instron tensile tester. The distance of the clamps was adjusted to 70 mm. A preforce of 2N was applied, and the jaws were then drawn apart with a speed of 5 mm/min. The force required to obtain a displacement of 0.5 mm and the displacement at a force of 100 N were measured.

### Example 1

A UV-curable polyester-epoxy pressure-sensitive adhesive tape was prepared by the following method. The following materials were combined in a closed glass container and placed in a forced air oven for 2 hrs at 150° C: 40 parts by weight amorphous copolyester with a Tg of 13°C (available as DYNOPOL S1313 from Huels AG, Marl, Germany), 5 parts liquid epoxy resin (epoxy equivalent weight approximately 187, available as DER 331 from Dow Chemical, Midland, MI), 39 parts solid epoxy resin (epoxy equivalent weight approx. 515, available as EPON 1001 from Shell Chemical) and 15 parts of a polyol adduct of glycol and propylene oxide (hydroxyl number of 38, number average molecular weight of 700, available as V230-238 from Dow Chemical).

The resulting mixture was stirred until a homogeneous mixture was obtained. The photoinitiator component, a triaryl sulphonium complex salt (available as UVOX UV1 6974 from Union Carbide, Danbury, CT) was added in the amount of 1 part and the mixture was again stirred until the photoinitiator was dissolved.

The resulting liquid mixture was then poured between two siliconized polyethylene terephalate (PET) film liners previously threaded into a hot knife coater. The coater had a bed temperature of 100°C and the knife was pre-heated in an oven to 120°C before coating. Hot-knife coating resulted in an unsupported pressure-sensitive adhesive tape with a thickness of 350 microns.

A section of the UV-curable pressure-sensitive adhesive tape measuring 18 mm in diameter was applied to the base of the window pin described above in the static shear strength test method. The tape was applied by removing one liner and pressing the adhesive surface lightly against the pin base by hand.

A section of acrylic pressure-sensitive adhesive transfer tape, available as Tape # 467 MP from 3M Company, St. Paul, MN, USA, measuring 2.5 cm x 2.5 cm, and having a thickness of 50 microns, was applied to the glass substrates specified in the test methods above. The tape was applied by firm hand pressure.

The layer of UV-curable pressure-sensitive adhesive on the pin head was then exposed to UV light generated by a portable lamp emitting UV Type A radiation for a period of 6 seconds. The lamp is available as Model UV PRINT 40C from Dr. K. Hoenle GmbH (Planegg, Germany). The base of the pin bearing the adhesive layer was held approximately 3 cm from the light source. By this method, a total of approx. 1.5 Joule /cm² UV-A radiation was received by the UV-curable adhesive layer.

Then the glass bearing the transfer tape was heated to approximately 130°C using infrared radiation for about 15 seconds.

The window pin bearing the irradiated adhesive layer was then applied to the section of acrylic transfer tape already in place on the surface of the heated glass substrate. The time between tape UV activation and lamination was between 30 and 90 seconds. The temperature of the respective glass substrate at the time of lamination was 130°C. The assembly comprising the two adhesive layers was adhered together by pressing the window pin against the glass substrate for 5 seconds with a pressure of approximately 50 N.

The glass substrate was then allowed to cool to room temperature, and the assembly was stored at room temperature and ambient humidity for 24 hrs (unless otherwise indicated in the table) prior to subjecting it to the test methods described above.

The results of the test are summarized in table 1.

### Comparative Example 1

Example 1 was repeated with the exception that the application of acrylic transfer tape to the glass was omitted. The window pin bearing the UV-curable structural hybrid adhesive tape was bonded directly to the respective glass substrate. The results of the test are summarized in table 1.

### Comparative Example 2

Example 1 was repeated with the exception that the UV-curable structural hybrid adhesive tape was omitted, i.e. only the pressure sensitive adhesive tape was used. A lamination pressure of 0.3 N/mm² was applied to the bonded area for 15 s.

The resulting assembly was subjected to the test described above and the test results are summarized in table 1.

### Comparative Example 3

Comparative Example 2 was repeated using an acrylic-based pressure sensitive adhesive tape no. # 5363, thickness 400 µm, which is commercially available from 3M Company, St. Paul, MN. A lamination pressure of 0.3 N/mm² was applied to the bonded area for 15 s.

The resulting assembly was subjected to the test described above and the test results are summarized in table 1.

### Example 2

Example 1 was repeated with the exception that the pressure sensitive adhesive transfer tape 467 MP was laminated to the UV-curable structural hybrid adhesive tape first to give an adhesive system according to the invention with the pressure sensitive adhesive layer measuring 22 mm in diameter and the structural hybrid adhesive layer 18 mm in diameter.

Then the UV-curable structural hybrid adhesive layer of the adhesive system was applied to the base of the window pin with the pressure sensitive adhesive transfer tape facing outwards. The adhesive system attached to the window pin was then irradiated by the procedure described in Example 1. The UV radiation passed through the pressure sensitive adhesive transfer tape to effect curing of the underlying layer of UV-curable structural hybrid adhesive tape.

The window pin bearing the adhesive laminate was applied to the heated glass as in Example 1

The resulting assembly was subjected to the test described above and the test results are summarized in table 1.

### Example 3

Example 2 was repeated with the exception that the adhesive system comprising UV-curable structural hybrid adhesive and pressure sensitive adhesive transfer tape was adhered to the window pin head in reverse fashion, i.e. the pressure sensitive adhesive transfer tape was applied to the base of the window pin and the UV-curable structural hybrid tape was facing outwards. The adhesive system on the window pin was irradiated and bonded to the glass as in Example 2.

The resulting assembly was subjected to the test described above and the test results are summarized in table 1.

### Example 4

An adhesive system comprising three layers was prepared by laminating the pressure sensitive adhesive transfer tape 467 MP (thickness 50 µm) as used in Example 1 to both sides of the UV-curable structural hybrid adhesive tape of Example 1 so that each pressure sensitive adhesive layers were 22 mm in diameter and the structural hybrid adhesive layer was 18 mm in diameter. The adhesive system was applied to the base of the window pin. The adhesive system on the window pin was then irradiated and applied to the heated glass as in Example 2.

The resulting assembly was subjected to the test described above and the test results are summarized in table 1.

### Example 5

Pressure-sensitive adhesive transfer tapes nos. 9461 P,467 MP, 9460, 9671 LE, 9469 and 468 MP which are commercially available from 3M Company, St. Paul, U.S.A., were subjected to the dynamic shear test as described above. The thickness of the transfer tapes and the results of the measurements are summarized in table 2.

### Example 6

The structural hybrid adhesive layer of the adhesive system of Example 2 was applied to a window pin and the pressure sensitive adhesive layer was facing outward. A siliconized paper liner was placed on a stainless steel plate having a temperature of 130°C. The adhesive system applied to the window pin was exposed to UV light as is described in Example 1 for 6 seconds, and the window pin was then firmly pressed with hand pressure to the siliconized release liner on the heated stainless steel plate. The pin was kept in this position for 3 minutes. The window pin bearing the adhesive system was then removed from the release liner and stored at room temperature and ambient humidity for 24 hrs. Then an FT IR (Fourier transform infrared) MIR (multiple internal reflectance) spectrum on ZnSe 45 of the exposed surface of the cured adhesive system was recorded using an FTIR spectrometer 20 SXC available from Nicolet. For comparison, an FT IR-MIR spectrum on ZnSe 45 was also taken for the surface of the pressure sensitive adhesive layer 467 MP applied to the window pin without the structural hybrid adhesive layer. The two spectra were virtually identical. The IR penetration depth is estimated to be in the order of 1 to several µm.

**Table 1**

| **Ex** | **Static shear [h, min]** | **Impact resistance** | | **Dynamic shear Fmax [N]** | | **Low temperature cycle** |
|---|---|---|---|---|---|---|
| | after 24 h | [J] | failure mode | before low temp. cycle | after low temp. cycle | visual inspection |
| 1 | > 20 h | 1.0 | failure between SHA and PSA | 306 | 296 | pass, no damages |
| 2 | > 20 h | 0.9 | failure between SHA and PSA | 210 | 207 | |
| 3 | 18 min | 0.4 | failure between PSA and window pin | 152 | 172 | |
| 4 | 4 min | 0.8 | failure between PSA and window pin | 132 | 136 | |
| C1 | > 20 h | 2.7 | failure between SHA and glass substrate or window pin, respectively | 728 | 532 | fail; cracks in the glass ceramic coating partly separated from glass substrate |
| C2 | < 1 min | < 0.2 | failure between PSA and glass substrate | - | - | pass, no damages |
| C3 | 2 min | 0.3 | failure between PSA and window pin | 85 | 70 | pass, no damages |

**Table 2**

| **PSA no.** | **Thickness [µm]** | **F at displacement of 0.5 mm [N]** | **Displacement [mm] at F = 100 N** |
|---|---|---|---|
| 9461 P | 25 | 65 | 5.8 |
| 467 MP | 50 | 36 | 8.3 |
| 9460 | 50 | 43 | 8.2 |
| 9671 LE | 50 | 19 | 11.5 |
| 9469 | 125 | 27 | 12.8 |
| 468 MP | 125 | 21 | 15.7 |

## Claims

1. Assembly comprising a first substrate (1) and a second substrate (4), a surface (1a) of the first substrate (1) being bonded to a surface (4a) of the second substrate (4) by an adhesive system comprising at least one pressure-sensitive adhesive layer (2) and at least one cured structural hybrid adhesive layer (3) wherein at least one of the pressure-sensitive adhesive layers is essentially continuous and extends essentially over the full width of the bonded area and wherein in case 2 or more pressure-sensitive adhesive layers (2) are present the pressure sensitive adhesive layers (2) are not in contact with each other and each have a thickness of about 100 µm or less.

2. Assembly according to claim 1 comprising one or two pressure-sensitive adhesive layers (2).

3. Assembly according to claims 1 or 2 wherein the thermal expansion coefficients of the first and second substrate (1), (4) differ at room temperature by 30 x 10⁻⁶ K⁻¹ or more.

4. Assembly according to claims 1-3 wherein the substrates (1), (4) are selected independently from each other from a group of materials comprising glass, metals, plastics, ceramics and wood.

5. Adhesive system comprising at least one pressure-sensitive adhesive layer (2) and at least one uncured structural bonding adhesive layer (3) wherein in case two or more pressure sensitive adhesive layers (2) are present, the pressure sensitive adhesive layers (2) are not in contact with each other and each have a thickness of about 100 µm or less, wherein at least one pressure-sensitive adhesive layer (2) is essentially continuous and extends essentially over the full width of the adhesive system and wherein at least the essentially continuous pressure-sensitive adhesive layer (2) extending essentially over the full width of the adhesive system, is not fully absorbed in the structural bonding adhesive layer or layers (3), respectively, upon curing.

6. Adhesive system according to claim 5 comprising one or two pressure-sensitive adhesive layers (2) and 1-3 structural hybrid adhesive layers (3).

7. Adhesive system according to any of claims 1-3 wherein the pressure-sensitive adhesive material or materials are selected so that the force required to provide a displacement of a layer (2) of the pressure-sensitive adhesive material of 0.5 mm, is at least 20 N as measured according to the dynamic shear strength test method.

8. Method of preparing an assembly according to claims 1-4 comprising providing a first and a second substrate (1), (4) and one or more pressure-sensitive adhesive layers (2) and one or more uncured structural hybrid adhesive layers (3), or an adhesive system according to claims 5-7, respectively, sandwiching the adhesive system between a surface (1a) of the first substrate (1) and a surface (4a) of the second substrate (4) or placing the uncured structural hybrid adhesive layer or layers (3), respectively, and the pressure-sensitive adhesive layer or layers (2), respectively, between the substrates (1) and (4), respectively, and curing the curable structural bonding adhesive layer or layers (3), respectively.
